Europäisches Patentamt

European Patent Office

Office européen des brevets

(11) Veröffentlichungsnummer: **0 509 546 A2**

# EUROPÄISCHE PATENTANMELDUNG

(21) Anmeldenummer: **92106767.4**

(22) Anmeldetag: **21.04.92**

(51) Int. Cl.5: **F16B 2/08**, F16B 7/06

(30) Priorität: **19.04.91 DE 9104819 U**

(43) Veröffentlichungstag der Anmeldung:
**21.10.92 Patentblatt 92/43**

(84) Benannte Vertragsstaaten:
**AT BE CH DE DK ES FR GB IT LI NL**

(71) Anmelder: **Trost, Bärbel**

**W-6965 Schillingstadt(DE)**

(72) Erfinder: **Trost, Bärbel**

**W-6965 Schillingstadt(DE)**

(74) Vertreter: **Bardehle, Heinz, Dipl.-Ing. et al
Patent- und Rechtsanwälte
Bardehle-Pagenberg-Dost-Altenburg-Frohwi-
tter-Geisler & Partner Postfach 860620
W-8000 München 80(DE)**

(54) **Verbindungsstück für an Stossstellen aneinandergefügte Abschnitte eines zylindrischen Gehäuses aus Blech.**

(57) Es wird eine Verbindungsvorrichtung für an einer Stoßstelle aneinandergefügte Abschnitte eines zylindrischen Gehäuses, insbesondere aus Blech, mit einem die Stoßstelle umfassenden Spannband vorgeschlagen, das neben der Stoßstelle umlaufende Aufweitungen der Abschnitte einfaßt. Zwischen den Abschnitten an der Stoßstelle ist ein steifer Zentrierring derart eingesetzt, daß er mit einer umlaufenden radialen Rippe vom Innenraum des Gehäuses her durch die Stoßstelle hindurchtritt und mit seinen beiderseits der Rippe liegenden Schenkeln an den Innenwänden der Abschnitte anliegt. Beim Spannen des Spannbandes werden Bereiche der Abschnitte, die sich zwischen den Schenkeln und dem Spannband befinden, eingespannt.

Fig. 1

EP 0 509 546 A2

Die Erfindung bezieht sich auf eine Verbindungsvorrichtung für an Stoßstellen aneinandergefügte Abschnitte eines zylindrischen Gehäuses insbesondere aus Blech mit einem die Stoßstelle umfassenden Spannband, das neben der Stoßstelle umlaufende Aufweitungen der Abschnitte einfaßt.

Eine derartige Verbindungsvorrichtung ist in den Figuren 3a und b der DE-OS 30 30 657 dargestellt. Bei dieser Verbindungsvorrichtung verlaufen die Aufweitungen der aneinerandergefügten Abschnitte nach außen derart schräg, daß sich zwischen ihnen in radialer Richtung nach außen ein sich verringernden Spalt ergibt, der einen Dichtring enthält. Über die beiden Aufweitungen ist eine Ringabdeckung als Spannband gestülpt, die sich in radialer Richtung nach innen erweitert und daher beim Aufdrücken auf die Aufweitungen diese zusammenzieht. Bei diesem Zusammenziehen wird der Dichtungsring mehr oder minder stark zusammengedrückt, d.h. der Abstand der Aufweitung des einen Abschnitts von der Aufweitung des angefügten Abschnitts hängt vom Grad dieses Zusammendrückens ab. Hieraus ergibt sich einerseits eine ungenaue gegenseitige Halterung zweier aneinandergefügter Abschnitte, andererseits auch eine gewisse Flexibilität im Bereich der Stoßstelle der beiden Abschnitte, da auf die beiden Abschnitte wirkende Kräfte den Dichtungsring mehr oder minder deformieren können.

Der Erfindung liegt die Aufgabe zugrunde, die eingangs geschilderte Verbindungsvorrichtung so zu gestalten, daß sich bei einfacher konstruktiver Ausführung stabile Anlageflächen für miteinander zu verbindende Teile bieten, so daß sich eine leicht montierbare und demontierbare Verbindungsvorrichtung ergibt, die mit hoher Stabilität die aneinandergefügten Abschnitte miteinander verbindet. Erfindungsgemäß geschieht dies mit einer Verbindungsvorrichtung mit den Merkmalen des Anspruchs 1.

Durch den steifen Zentrierring wird eine Verbindung zwischen zwei aneinanderzufügende Abschnitte geschaffen, die wegen der den Zentrierring besonders stabilisierenden umlaufenden radialen Rippe die notwendigen Stabilitätsvoraussetzungen erhält. Dabei kann die Rippe auch als Anschlag für die Stirnseiten der Abschnitte dienen, wodurch in axialer Richtung des durch die aneinandergefügten Abschnitte gebildeten zylindrischen Gehäuses in axialer Richtung eine definierte Positionierung gegeben wird, oder als Träger einer Dichtung. Schließlich wirkt der Zentrierring mit dem Spannband im Sinne einer Einspannung zusammen, da die beiderseits der Rippe liegenden Schenkel des Spannbandes zumindest teilweise an den Innenwänden der Abschnitte anliegen und durch das Spannen des Spannbandes gegen die Abschnitte gezogen werden, wobei die Abschnitte von der Gegenseite durch das Spannband gegen die Schenkel gedrückt werden. Insgesamt ergibt sich damit eine Einspannung des Bereichs der aneinandergelegten Abschnitte, der sich zwischen den Schenkein des Zentrierrings und dem Spannband befindet. Diese Bauteile liegen flach aneinander an und geben damit der Verbindung die gewünschte hohe Stabilität. Die feste Anlage der Schenkel und des Spannbandes im Bereich der Verbindung der Abschnitte liefert von sich aus eine hohe Dichtigkeit, die gegebenenfalls durch eine dünne Zwischenlage aus Kunststoff und dergleichen noch erhöht werden kann. Wegen der flächigen Anlage der Schenkel des Zentrierringes und des Spannbandes an den Abschnitten führt eine derartige dünne Zwischenlage zu keinerlei Instabilität der Verbindung.

Zweckmäßig formt man den Zentrierring als Blechring, in dem dann die Rippe durch eine Falte ausgebildet wird. Zur Erzielung einer besonders hohen Stabilität des Zentrierringes und damit der gesamten Verbindungsvorrichtung läßt sich die Rippe mit solcher Höhe ausbilden, daß sie in eine Ausbauchung des Spannbandes hineinragt, die dann die Rippe umgibt und somit im Falle von auftretenden Kräften das Spannband zusätzlich stabilisiert.

Eine weitere Stabilitätserhöhung erhält man dann, wenn die Aufweitungen der Abschnitte als aus den Rändern der Abschnitte herausragende umlaufende Falten ausgeformt sind, die in entsprechenden Ausbauchungen des Spannbandes hineinragen.

Gemäß einer weiteren Ausgestaltung der vorliegenden Erfindung ergibt sich eine verbesserte Dichtigkeit der Verbindung, wenn das Spannband unter einem Winkel von z.B. 45° auf parallel geneigten Aufweitungen der Abschnitte zur Anlage kommt und die Stirnseiten der Abschnitte sich an einer Dichtung abstützen, die die umlaufende radiale Rippe des Zentrierrings umfaßt.

Um für das Spannen des Spannbandes ein Spannschloß großer Stabilität zu schaffen, kann man auf gegenüberstehende Enden des Spannbandes jeweils einen Lagerbock mit zwei Stützteilen und einer diese verbindenden Wölbung aufsetzen, wobei die Stützteile am Spannband beiderseits der Rippe des Zentrierrings befestigt sind und die Wölbung als Widerlager für eine Spannschraube und eine Spannmutter dient. Aufgrund dieser Gestaltung des Lagerbocks in seiner Befestigung am Spannband ergeben sich stabile Widerlager für das Spannschloß, so daß das Spannband entsprechend kräftig zusammengezogen werden kann.

Ausführungsbeispiele der Erfindung sind in den Figuren dargestellt. Es zeigen:

Fig. 1 einen Teil eines zylindrischen Gehäuses aus Blech mit zwei aneinandergefügten Abschnitten;

Fig. 2 die aneinandergefügten Abschnitte mit Zentrierring und Spannband im Schnitt gemäß der Linie II-II;

Fig. 3 eine vergrößerte Darstellung des Spannschlosses gemäß Fig. 1;

Fig. 4 eine Variante gegenüber der Darstellung in Fig. 2, bei der die Abschnitte gegenüber dem Spannband axial in besonderer Weise gesichert sind;

Fig. 5 eine besonders stabile Ausführung eines Spannschlosses;

Fig. 6 eine weitere vorteilhafte Ausgestaltung der aneinandergefügten Abschnitte mit Zentrierring und Spannband.

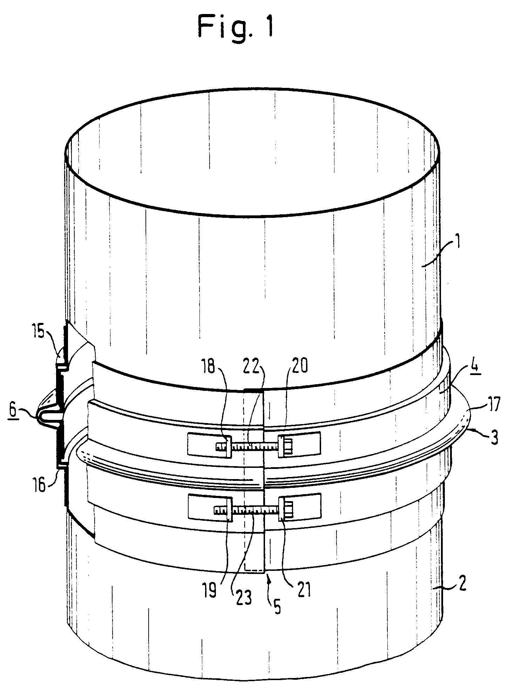

Gemäß Fig. 1 sind die beiden Abschnitte 1 und 2, bei denen es sich z.B. um Abschnitte eines Silos handeln kann, über eine Verbindungsvorrichtung 3 aneinandergefügt, von welcher in der Fig. 1 ein Spannband 4 mit einem Spannschloß 5 und ein Zentrierring 6 dargestellt sind. Durch die Verbindungsvorrichtung 3 werden die beiden Abschnitte 1 und 2 fest miteinander verbunden. Dabei lassen sich Spannband und Zentrierring in einfacher Weise montieren und demontieren, so daß ein Auf- und Abbau des betreffenden Gehäuses am Aufstellungsort leicht möglich ist.

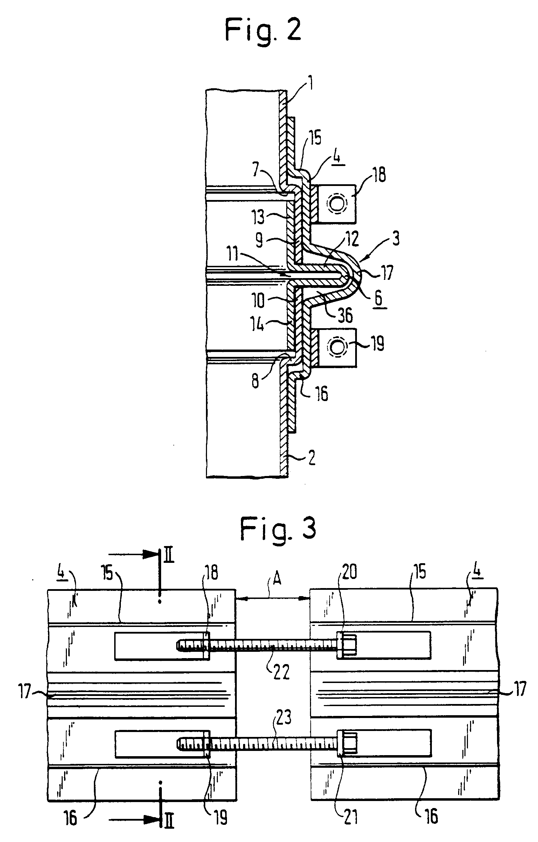

In Fig. 2 ist die in Fig. 1 dargestellte Verbindungsvorrichtung 3 in einem Schnitt längs der Linie II-II aus Fig. 3 dargestellt. Gezeigt sind die Wandungen der Abschnitte 1 und 2, die mit als Stufe ausgebildeten Aufweitungen 7 und 8 versehen sind. Diese Aufweitungen können in bekannter Weise durch einen Rollvorgang in die Wandungen der Abschnitte 1 und 2 eingeformt werden. Die Abschnitte 1 und 2 stehen sich an einer Stoßstelle 11 einander gegenüber, wo auf ihrer Innenseite der Zentrierring 6 angebracht ist. Der Zentrierring 6 ist hier als Blechring geformt und bildet in seiner Mitte eine Rippe 12, die durch eine Falte aus dem Blechring ausgeformt ist. Neben der Rippe 12 erstrecken sich axial zu den Abschnitten 1 und 2 zwei Schenkel 13 und 14, die an den Innenwänden der Abschnitte 1 und 2 anliegen. Über die Stoßstelle 11 der Abschnitte 1 und 2 erstreckt sich das Spannband 4, das mit seinen Stufen 15 und 16 die Aufweitungen 7 und 8 einfaßt. In seiner Mitte besitzt das Spannband 4 eine Ausbauchung 17, welche die Rippe 12 umfaßt, so daß Bereiche 9 und 10 der Abschnitte 1 und 2 neben der Stoßstelle 11 durch das Spannband 4 abgedeckt sind. An dem dargestellten Teil des Spannbandes 4 sind die aus Fig. 3 im einzelnen ersichtlichen Winkel 18 und 19 befestigt, die in der im Zusammenhang mit der Fig., 3 erläuterten Weise zum Spannen des Spannbandes dienen.

Beim Spannen des Spannbandes 4, d.h. durch Anziehen des in Fig. 1 dargestellten Spannschlosses 5 zieht sich das Spannband 4 um die Abschnitte 1 und 2 und damit die Stoßstelle 11, wodurch die Bereiche 9 und 10 gegen die Schenkel 13 und 14 des Zentrierringes 6 gepreßt werden. Da der Zentrierring 6 innerhalb der Abschnitte 1 und 2 schon bei der Montage satt an den Innenwänden der Abschnitte 1 und 2 anliegt, läßt er sich beim Anpressen des Spannbandes 4 aufgrund seiner Ringgestaltung praktisch nicht zusammendrücken, er bildet also ein stabiles Widerlager gegen den Andruck durch das Spannband 4. Auf diese Weise werden die Bereiche 9 und 10 der Abschnitte 1 und 2 fest eingespannt, und zwar über flächig aneinander anliegende Bauteile, womit sich insgesamt eine besonders stabile Verbindung zwischen den Abschnitten 1 und 2 ergibt.

Bei der in Fig. 2 dargestellten Gestaltung des Zentrierrings 6 ragt die Rippe 12 relativ weit radial nach außen durch die Stoßstelle 11 hindurch. Die Rippe 12 gibt damit dem Zentrierring 6 eine besonders hohe Stabilität. Wenn diese wegen eines entsprechend steifen Materials der Abschnitte 1 und 2 nicht erforderlich ist, genügt es auch, die Rippe 12 nur in den Spalt zwischen den beiden Stirnseiten der Bereiche 9 und 10 hineinragen zu lassen, ohne daß dabei die Rippe 12 die Ränder 9 und 10 nach außen hin überragt. In diesem Fall kann das Spannband 4 im Bereich der somit verkürzten Rippe 12 flach ausgebildet sein.

In der Fig. 3 sind die beiden Enden des Spannbandes 4 dargestellt, und zwar in einer Ansicht wie in Fig. 1. Im Gegensatz zur Fig. 1 liegt allerdings folgender Unterschied vor. Gemäß Fig. 1 bildet das Spannband im Bereich des Spannschlosses 5 eine Überlappung seiner beiden Enden, während gemäß Fig. 3 die beiden Enden des Spannbandes 4 mit dem Abstand A einander gegenüber stehen. Die Überlappung des Spannbandes, wie sie in Fig. 1 dargestellt ist, ist grundsätzlich zu bevorzugen, jedoch kann es auch ausreichend sein, wenn die Enden des Spannbandes sich nicht überlappen.

Gemäß Fig. 3 ist das Spannband 4 auf einer Seite mit Winkeln 18 und 19, auf der anderen Seite mit Winkeln 20 und 21 versehen. Die Winkel 18, 19, 20 und 21 sind am Spannband 4 befestigt, z.B. durch Punktschweißen. Die Winkel 18 und 19 besitzen jeweils ein Muttergewinde, in das die Spannschrauben 22 und 23 eingeschraubt sind, die die Winkel 20 und 21 durchsetzen, so daß die Spannschrauben an den Winkeln 20 und 21 ihr Widerlager finden. Durch Anziehen der Schrauben 22 und 23 werden die in Fig. 3 dargestellten Enden des Spannbandes 4 aufeinander zu gezogen.

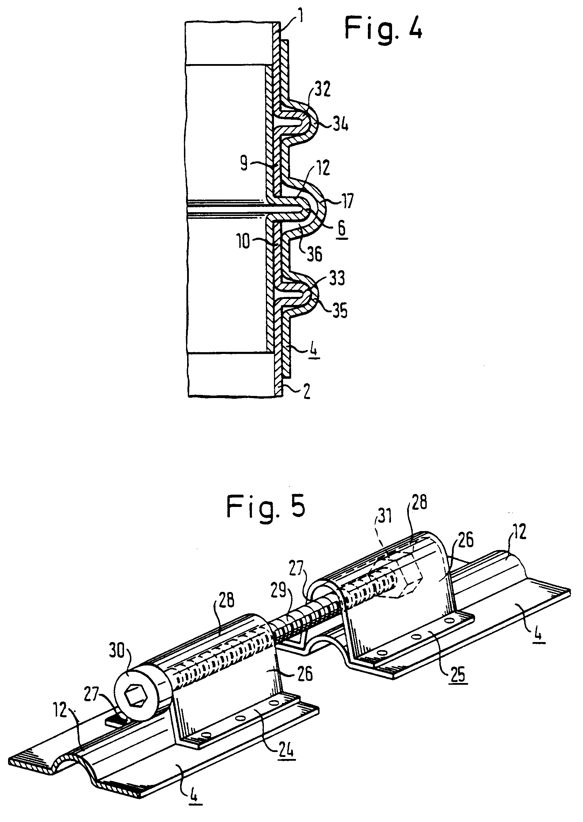

In Fig. 4 ist eine besonders versteifte Verbindungsvorrichtung dargestellt, bei welcher die Bereiche 9 und 10 der Abschnitte 1 und 2 mit besonders gestalteten Aufweitungen 32 und 33 versehen sind. Diese Aufweitungen werden von entsprechenden Ausbauchungen 34 und 35 des Spannbandes 4 abgedeckt. Aufgrund dieser Gestaltung ergibt sich zwischen den Bereichen 9 und 10 und dem Spannband 4 eine besonders stabile axiale Sicherung, die bei der Ausführungsform gemäß Fig. 1 lediglich durch die Aufweitung 7 und 8 und die Stufen 15 und 16 gegeben ist.

Durch die flächige Anlage der Schenkel 13, 14 und des Spannbandes 4 gegen Teile der Bereiche 9 und 10 der Abschnitte 1 und 2 ergibt sich ein hoher Grad der Abdichtung des Innenraumes des betreffenden Gehäuses gegenüber dem Außenraum. Wenn diese Dichtigkeit erhöht werden soll, insbesondere im Falle eines unter Druck stehenden Gehäuses, kann man den Hohlraum 36 zwischen Rippe 12 und Ausbauchung 17 mit einem Dichtungsmaterial ausfüllen, das an dieser Stelle die Stabilität der Verbindungsvorrichtung überhaupt nicht beeinträchtigt.

Fig. 5 zeigt eine Variante eines Spannschlosses für das Zusammenziehen des Spannbandes 4. Auf den beiden Enden des Spannbandes 4 sind je ein Lagerbock 24 und 25 befestigt. Die Lagerböcke 24 und 25 enthalten die beiden Stützteile 26 und 27, die über die Wölbung 28 miteinander verbunden sind. Die Stützteile 26 und 27 sind beiderseits der Rippe 12 des Spannbandes 4 an diesem befestigt. Die Wölbungen 28 der beiden Lagerböcke 24 und 25 bilden die Widerlager für die Spannschraube 29, die sich mit ihrem Kopf 30 gegen den Lagerbock 24 stützt. Im Lagerbock 25 ist eine Spannmutter 31 eingehängt, so daß sie sich auf geringe Richtungsänderungen der Spannschraube 29 selbsttätig einstellen kann. Damit bildet also der Lagerbock 25 das Widerlager für die Spannmutter 31.

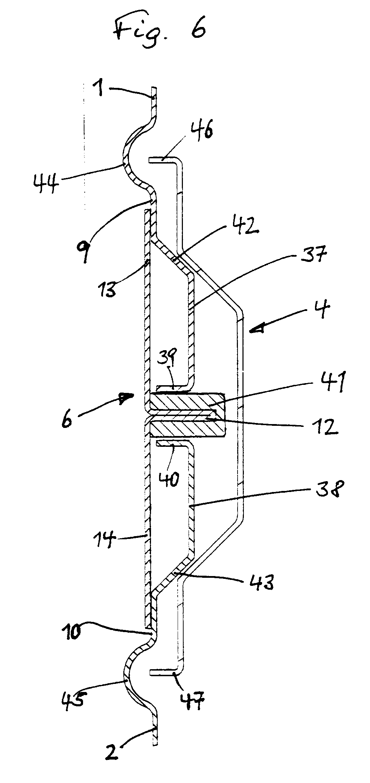

In Fig. 6 ist eine besonders gut abdichtende Verbindungsvorrichtung dargestellt, bei der die Bereiche 9 und 10 der Abschnitte 1 und 2 mit Aufweitungen 37, 38 versehen sind. Die Aufweitungen 37, 38 weisen Wandabschnitte 42, 43, die unter ca. 45° zur Behälterachse nach außen geneigt sind und Stege 39, 40 auf, die an einer Dichtung 41 flächig anliegen. Diese Dichtung 41 umgibt die sich berührenden Teile der Rippe 12 des Zentrierringes 6. Das Spannband 4 weist Schenkel auf, die parallel zu den Wandabschnitten 42, 43 sind, sich beim Zusammenbau an diese Wandabschnitte 42, 43 flächig anlegen und die Abschnitte 1, 2 im Bereich 9, 10 gegen die Schenkel 13, 14 des Zentrierrings 6 drücken. Gleichzeitig werden die Aufweitungen 37, 38 mit ihren Stegen 39, 40 flächig gegen die Dichtung 41 gedrückt. Die Bereiche 9, 10 sind über Sicken 44, 45 mit den Abschnitten 1, 2 verbunden, und das Spannband 4 greift mit Bördeln 46, 47 in diese Sicken 44, 45 ein.

## Patentansprüche

1. Verbindungsvorrichtung für an einer Stoßstelle aneinandergefügte Abschnitte eines zylindrischen Gehäuses, insbesondere aus Blech, mit einem die Stoßstelle umfassenden Spannband, das neben der Stoßstelle umlaufende Aufweitungen der Abschnitte einfaßt, **dadurch gekennzeichnet,** daß zwischen den Abschnitten (1, 2) an der Stoßstelle ein steifer Zentrierring (6) derart eingesetzt ist, daß er mit einer umlaufenden radialen Rippe (12) vom Innenraum des Gehäuses her durch die Stoßstelle hindurchtritt und mit seinen beiderseits der Rippe (12) liegenden Schenkeln (13, 14) an den Innenwänden der Abschnitte (1, 2) anliegt, wobei beim Spannen des Spannbandes (4) Bereiche (9, 10) der Abschnitte (1, 2), die sich zwischen den Schenkeln (13, 14) und dem Spannband (4) befinden, eingespannt werden.

2. Verbindungsvorrichtung nach Anspruch 1, **dadurch gekennzeichnet,** daß der Zentrierring (6) als Blechring geformt und die Rippe (12) durch eine Falte ausgebildet ist.

3. Verbindungsvorrichtung nach Anspruch 1 oder 2, **dadurch gekennzeichnet,** daß die Rippe (12) in eine Ausbauchung (17) des Spannbandes (4) hineinragt.

4. Verbindungsvorrichtung nach einem der Ansprüche 1 bis 3, **dadurch gekennzeichnet,** daß die Aufweitungen (7, 8) als aus den Bereichen (9, 10) der Abschnitte (1, 2) herausragende umlaufende Falten (32, 33) ausgeformt sind, die in entsprechende Ausbauchungen (34, 35) des Spannbandes (4) hineinragen.

5. Verbindungsvorrichtung nach einem der Ansprüche 1 bis 4, **dadurch gekennzeichnet,** daß auf gegenüberstehende Enden des Spannbandes (4) jeweils ein Lagerbock (24, 25) mit zwei Stützteilen (26, 27) und einer diese verbindenden Wölbung (28) aufgesetzt ist, wobei die Stützteile (26, 27) am Spannband (4) beiderseits der Rippe (12) befestigt sind und die Wölbung (28) als Widerlager für eine Spannschraube (29) und eine Spannmutter (31) dient.

6. Verbindungsvorrichtung nach einem der Ansprüche 1 bis 5, dadurch gekennzeichnet, daß die Rippe (12) von einer Dichtung (41) umgeben ist.

7. Verbindungsvorrichtung nach einem der Ansprüche 1 bis 3 und 6, dadurch gekennzeichnet, daß in den Bereichen (9, 10) die Aufweitungen (37, 38) parallel zu den Schenkeln (13, 14) verlaufen, parallel zu der Rippe (12) einwärts abgebogen verlaufende Stege (39, 40) und unter ca. 45° zu der Behälterachse geneigte Wandabschnitte (42, 43) aufweisen, daß das Spannband (4) an den geneigten Wandabschnitten (42, 43) anliegt, und daß die parallel zur Rippe (12) verlaufenden Stege (39, 40) die Dichtung (41) gegen die Rippe drückend anliegen.

8. Verbindungsvorichtung gemäß Anspruch 7, dadurch gekennzeichnet, daß die Bereiche (9, 10) über Sicken (44, 45) mit den Abschnitten (1, 2) verbunden sind und das Spannband (4) mit Bördeln (46, 47) in diese Sicken (44, 45) eingreift.

# Fig. 1

# Fig. 2

# Fig. 3

Fig. 4

Fig. 5

Fig. 6